# EUROPEAN PATENT APPLICATION

(11) **EP 0 664 167 A1**
(43) Date of publication of application: **26.07.1995**
(21) Application number: 94309611.5
(22) Date of filing: 21.12.1994
(51) Int. Cl.: B21D 13/04

(54) **Method and apparatus for making heat exchanger fins**

(30) Priority: 21.12.1993 US 170720
(71) Applicant: LIVERNOIS AUTOMATION COMPANY, Dearborn, Michigan 48124 (US)
(72) Inventor: Bianchi, Sabatino A., Dearborn, Michigan 48124 (US)
(74) Representative: Singleton, Jeffrey

(57) **Abstract**

A method and apparatus for forming a strip of fins with louvers comprising providing fin forming rolls comprising stacked carbide plates having rolling and cutting edges forming fins with lovuers, and directing a strip of clad aluminum between an opposed pair of fin forming rols. The carbide plates are preferably made of carbide containing tungsten, cobalt and carbon and wherein the major constituent is tungsten.

## Description

### Field of the Invention

This invention relates to tooling and particularly fin rolls with specialty equipment used to produce heat exchange fins having louvers therein.

### Background of the Invention

The fin tooling can be best describe as a plurality of stacked steel plates having cutting and forming teeth on their periphery; and more specifically, to an improved plate construction that takes advantage of certain material characteristics common in nonferrous materials. Typical patents showing such rolls used for making fins with louvers are shown in United States Patents 3,214,954; 3,318,128; 3,998,600; and 4,067,219 the disclosure of which are incorporated herein by reference.

The heat exchange industry has rapidly changed from producing copper/brass heat exchangers to aluminum heat exchangers utilizing fin strips. This change has occurred primarily to take advantage of the weight reduction aluminum offers. The aluminum strips can be bonded by several braze methods such vacuum brazing, flux brazing, and controlled atmosphere brazing to name a few. In recent years the controlled atmosphere brazing (CAB) has become the brazing method of choice. The CAB process requires the use of clad aluminum alloys on the aluminum strip that is consequently formed into fins. The clad is made up of 7-11% silicon ranging in thickness from 1% to 7% of the total material thickness. This clad is typically covering one or both sides of a base aluminum alloy. Silicon is best know for its abrasive qualities and these tendencies are the same when used as a cladding for fin material. Consequently, fin rolls produced from the standard hardened steel plates wear much more rapidly when silicon clad aluminum fin material is formed than when non clad aluminum or copper fin materials are formed. This problem is most severe in fin rolls for making fins with louvers. Although this problem has long existed, as far as the present invention is aware, the problem has not been solved.

### Objectives of the Invention

The primary objective of the present invention is to significantly improve fin roll life through material changes not obvious to general industry yet still be able to use known or currently existing manufacturing processes to produce fin forming tools.

### Summary of the Invention

This primary objective has been attained by clearly identifying the reasons steel rolls wear and identifying a material that either eliminated or minimized those factors.

The current steel roll technology is limited by the hardness that can be achieved through known heat treating processes. Significant hardness can be achieved with steel but at the expense of losing other desirable properties such as ductility and crack resistance. It is desirable to produce fin rolls with the hardest available material in order to enhance the bearing effectiveness, i.e., the ratio of soft to hard is directly related to the amount of friction created. This may reduce the amount of oil consumed during the forming process. Steel rolls secondly have the tendency to corrode due to dissimilar metals in combination with numerous combinations of lubricants used in the fin forming process. Once corrosion begins the pitting areas will rapidly deteriorate the roll's ability to make clean cuts and forms to the tolerances required for optimal heat exchanger performance. Steel rolls also become magnetized through repeated contact with each other. This magnetic field cause ferrous metal fines to cling to the rolls and consequently find their way to the sharp cutting surfaces. When these metal fines are sheared by the cutting surfaces a dulling of the cutting surfaces occur. Finally the grain structure and surface density of steel have an effect on the tendency of aluminum to attach itself to the steel roll surface. The smaller the grain structure and the denser the rolls surface the less galling that occurs.

It has thus been the primary objective to combine the best attributes of the roll design, material properties, and the known manufacturing processes in order to produce the highest value fin rolls produced today.

In accordance with the invention, this objective has been achieved by providing heat exchange fin manufacturing tool that utilizes the unique material characteristics of carbide, i.e., hardness, corrosion resistance, surface density, and machinability.

### Description of the Drawings

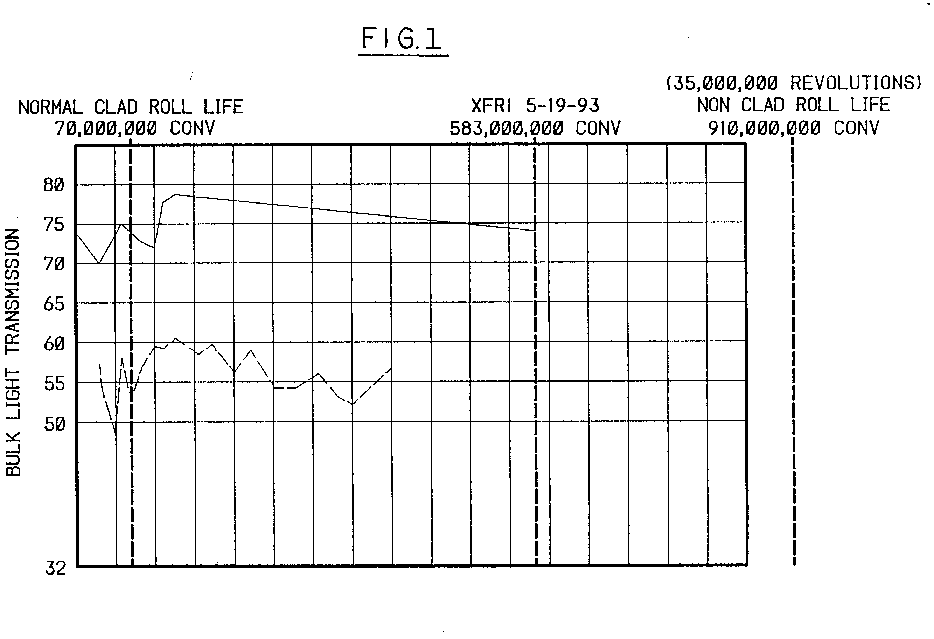

FIG. 1 is a diagram showing the tests made by bulk light transmission versus convolutions for two prolonged tests.

### Detailed Description of the Preferred Embodiments

In accordance with the invention, the method and apparatus embodying the invention is like that of the aforementioned United States patents and particularly United States patent 4,067,219; each of which is incorporated herein by reference. Such a conventional fin roll machine includes a pair of form rolls and mounted on the frame of the machine in intermeshing relation as illustrated. Sheet metal ribbon stock is fed from a pair of feed rollers (not illustrated) between form rolls such as to form corrugations therein, the strip emerging from the form rolls. As the corrugated strip emerges from form rolls it is guided by rails to a pair of gathering rolls which advances the corrugated strip towards a spring pressure plate. Pressure plate cooperates with rail to frictionally retard the advancing movement of the corrugated strip so that it is gathered or compressed lengthwise by further bending at the crests of the convolutions into its finished form. Insofar as the apparatus illustrated in the patent is concerned, the invention has to do only with the design and configuration of the form rolls, the remainder of the apparatus is conventional and may comprise devices other than those specifically illustrated.

The finish strip comprises successive convolutions connected by return bends at the opposite ends thereof. Each convolution is formed with a plurality of fins or louvers which are cut and twisted so that they project from opposite sides of each convolution.

In accordance with the present invention, the fin rolls are made of a material having the properties of carbide and preferably of a carbide having the following chemical composition by weight:

| | |
|---|---|
| Carbon | 5.42% |
| Nickel | 0.07% |
| Tungsten | 81.75% |
| Cobalt | 12.35% |
| Tantalum | 0.003% |
| Iron | 0.01% |

Tests have shown that unexpectedly the wear is reduced and resultant life of fin rolls is extended far beyond that heretofore obtained by steel rolls as shown in FIG. 1.

Fin roll tooling wear is measured by inspection of the fins produced. As the fin rolls wear, the louvered fins produced will exhibit a continuing gradual reduction of the angle of the individual louvers, as well as a deterioration in the quality of the louver slitting action (which will be evidenced by the presence of burrs, and eventually, a tearing rather than slitting of the fin material as the louvers are produced). There are several reliable methods for checking both reduction of louver angle and slitting quality deterioration.

Fin roll life may be expressed as the number of fins or convolutions produced until the quality of the fins produced by the roll no longer meets criteria for being acceptable.

As shown in FIG. 1, standard rolls typically may have an expected life of about 70,000,000 convolutions when producing clad aluminum fins (actual life for different users may vary depending on the user's criteria for acceptance of part quality).

In the test conducted, a standard set of rolls had produced 70,000,000 fin convolutions until the set was no longer able to produce fins of acceptable quality. This production was completed in twenty-four days, operating twenty-four hours per day.

A second set of carbide rolls, by comparison, producing an identical part from identical material under identical conditions have currently been in production more than one year, twenty-four hours per day and have produced more than 1,000,000,000 (one billion) convolutions and currently show no measurable wear of the rolls based on identical criteria for judging roll wear.

## Claims

1. A method for forming a strip of fins with louvers comprising
providing fin forming rolls comprising stacked carbide plates having rolling and cutting edges forming fins with louvers, and
directing a strip of clad aluminum between an opposed pair of said fin forming rolls.

2. The method and apparatus set forth in claim 1 wherein said carbide plates are made of carbide containing tungsten, cobalt and carbon and wherein the major constituent is tungsten.

3. An apparatus for forming a strip of fins with louvers comprising
fin forming rolls comprising stacked carbide plates having rolling and cutting edges forming fins with louvers.

4. The apparatus set forth in claim 3 wherein said carbide plates are made of carbide containing tungsten, cobalt and carbon and wherein the major constituent is tungsten.
